# EUROPEAN PATENT APPLICATION

(11) **EP 2 128 460 A1**
(43) Date of publication of application: **02.12.2009**
(21) Application number: 08021979.3
(22) Date of filing: 18.12.2008
(51) Int. Cl.: F16B 19/02, F16B 21/06, F16B 21/16

(54) **Fastening component, fastening unit, and device having the fastening unit.**

(30) Priority: 30.05.2008 TW 97120228
(71) Applicant: Hannspree, Inc., Taipei City (TW)
(72) Inventor: Torn, Sheen-Yan, Sindian City Taipei County 231 (TW); Liou, Guan-De, Taipei City 108 (TW); Tsai, Stephan, Sijhih City Taipei County 221 (TW)
(74) Representative: Hübner, Gerd

(57) **Abstract**

A fastening unit includes a fastening component (41) and a hole-defining unit. The fastening component (41) is adapted to be fixed to a first body (3), and includes a cylindrical post body (411) and at least one surrounding member (412). The post body (411) extends along a post axis (D1). The surrounding member (412) surrounds and is fixed to an outer post surface of the post body (411), and a portion of lines (D2) tangent to points on an outermost perimeter of the surrounding member (412) are at non-90° angles (α) with respect to the post axis (D1). The hole-defining unit is adapted to be provided in a surface of a second body (2), and defines a fastener hole (42) that fittingly receives the fastening component (41) for interconnecting the first and second bodies (3,2).

## Description

This invention relates to a fastening unit, more particularly to a fastening unit that allows for quick assembly of two bodies.

With the advancement in electronic technology, electronic devices such as Liquid Crystal Display (LCD) devices and televisions have become an indispensable part of modern life. Efficient assembly of the electronic device is therefore important.

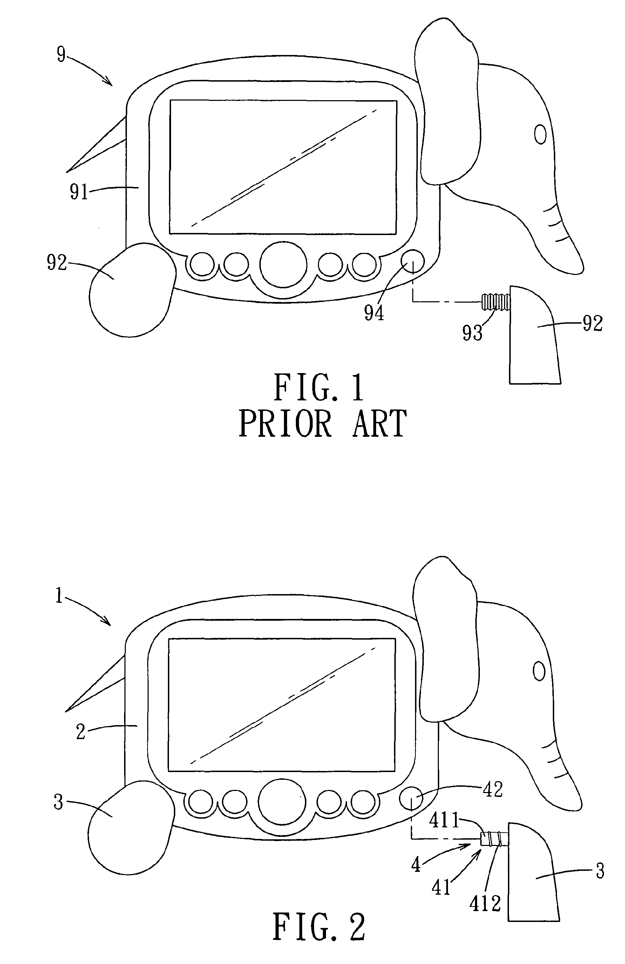

Figure 1 illustrates a conventional electronic device 9 (in this case, a display device) provided with a custom-designed form. In order to enable assembly of an external connecting component 92 to a device body 91, the external connecting component 92 comprises a threaded post 93 protruding from an outer surface of the external connecting component 92. Typically, the threaded post 93 is pre-fabricated, and has one end embedded in the external connecting component 92 during fabrication of the external connecting component 92. The device body 91 is correspondingly provided with a threaded hole 94 at a desired position on an outer surface of the device body 91. When the threaded post 93 is extended into and engages threadedly the threaded hole 94, the external connecting component 92 is assembled securely to the device body 91.

However, assembly of the external connecting component 92 to the device body 91 via threaded engagement between the threaded post 93 and the threaded hole 94 is time consuming and thus increases labor cost.

Therefore, an object of the present invention is to provide a fastening unit that allows for quick assembly of two bodies.

According to the present invention, there is provided a fastening component comprising a cylindrical post body extending along a post axis, and a surrounding member, said surrounding member being fixed to said post body such that a portion of lines tangent to points on an outermost perimeter of said surrounding member are at non-90° angles with respect to the post axis.

In an embodiment of the invention, the fastening component comprises at least one of the following features:
- the surrounding member is made of a resilient material,
- the resilient material of said surrounding member is one of a silicone resin material and a rubber material,
- the surrounding member has one of a closed ring shape, an open ring shape, and a helical shape,
- the outer post surface of said post body is formed with at least one groove equal in number to and having a shape complementing said surrounding member for receiving a section of said surrounding member, and
- The surrounding member is adhered to said outer post surface of said post body.

According to a second aspect of the invention, there is provided a fastening unit adapted for interconnecting a first body and a second body, said fastening unit comprising the fastening component which is adapted to be fixed to the first body, and a hole-defining unit adapted to be provided in a surface of the second body, and defining a fastener hole that fittingly receives said fastening component for interconnecting the first and second bodies.

In an embodiment of the invention, the fastening unit comprises at least one of the following features:
- the fastening component is pre-fabricated, and has one end embedded in the first body during fabrication of the first body through one of an injection molding and a foam molding process, and
- the post body of said fastening component and the first body are integrally formed.

According to a third aspect of the invention, there is provided a device comprising a first body, a second body and the fastening unit.

In an embodiment of the invention, said first body is one of a display device and an external connecting component, and said second body is the other of said display device and said external connecting component.

When the fastening component is pushed into the fastener hole to interconnect the first and second bodies, friction provided by the surrounding member of the fastening component resists rotation of the fastening component in the fastener hole and resists movement of the fastening component in the fastener hole along an axial direction of the fastener hole. The first and second bodies are thus quickly and securely assembled.

Other features and advantages of the present invention will become apparent in the following detailed description of the preferred embodiment with reference to the accompanying drawings, of which:
Figure 1 is a schematic view of a conventional electronic device;
Figure 2 is a perspective view of a first preferred embodiment of a device according to the present invention, showing first and second bodies of the device prior to assembly;
Figure 3 is a partly exploded perspective view of a fastening component of the preferred embodiment; and
Figure 4 is a schematic view to illustrate a line tangent to a point on an outermost perimeter of a surrounding member and at a non-90° angle with respect to a post axis of the fastening component of the preferred embodiment.

Figure 2 illustrates a preferred embodiment of a device 1 according to the present invention. The device 1 comprises a first body 3, a second body 2, and a fastening unit 4. In this embodiment, the device 1 is an electronic device having a custom-designed form. In particular, the first body 3 is an external connecting component, and the second body 2 is a display device. However, the device 1 of the present invention is not limited to the electronic device, and can be any device that comprises the first and second bodies 3,2 and the fastening unit 4, wherein the first and second bodies 3,2 are separate bodies that can be interconnected by the fastening unit 4.

The fastening unit 4 includes a fastening component 41 and a hole-defining unit. The hole-defining unit includes a hole-defining wall that defines a fastener hole 42 that fittingly receives the fastening component 41 for interconnecting the first and second bodies 3,2. In this embodiment, the fastening component 41 is fixed to the first body 3, and the hole-defining unit is disposed in a surface of the second body 2. In this embodiment, the fastening component 41 has one end embedded in the first body 3. That is, the fastening component 41 can be pre-fabricated, and one end of the fastening component 41 is embedded in the first body 3 during fabrication of the first body 3 through an injection molding or foam molding process.

However, the manner in which the fastening component 41 is fixed to the first body 3 is not limited to what is described above. In practice, the fastening component 41 and the first body 3 can be integrally formed. Similarly, the arrangement of the fastening component 41 and the hole-defining unit is not limited to what is described above. For example, in a case where the second body 2 is the external connecting component and the first body 3 is the display device, the hole-defining unit can still be provided in the second body 2, and the fastening component 41 can be fixed to the first body 3.

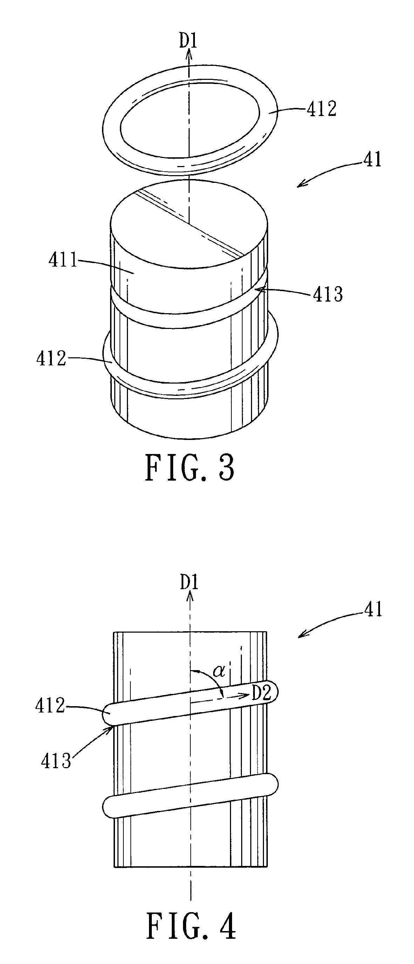

Referring to Figures 3 and 4, the fastening component 41 is provided with a cylindrical post body 411 extending along a post axis (D1), and a plurality of surrounding members 412 that surround and that are fixed to an outer post surface of the post body 411. In this embodiment, there are two surrounding members 412. The surrounding members 412 are made of a silicone resin material, a rubber material, or another type of resilient material. Each of the surrounding members 412 has a shape of a closed ring, such as an O-ring, and is fixed to the outer post surface of the post body 411 such that a line (D2) tangent to a point on an outermost perimeter of the surrounding member 412 is at a non-90° angle (α) with respect to the post axis (D1). That is, a projection of the line (D2) forms a non-90° angle (α) with the post axis (D1). Of course, only a portion of lines tangent to points on the outermost perimeter of the surrounding member 412 must be at non-90° angles (α) with respect to the post axis (D1) to be within the scope of this invention.

When the fastening component 41 is pushed into the fastener hole 42 to interconnect the first and second bodies 3,2, the surrounding members 412 are compressed and produce friction between the post body 411 and the hole-defining wall of the hole-defining unit, thereby preventing easy removal of the fastening component 41 from the fastener hole 42 along an axial direction. Moreover, since each of the surrounding members 412 is configured such that a line (D2) tangent to a point on the outermost perimeter of the surrounding member 412 is not perpendicular to the post axis (D1), the surrounding members 412 have a greater area of contact with the hole-defining wall along the axial direction, which enables more friction between the surrounding members 412 and the hole-defining wall that resists rotation of the fastening component 41 in the fastener hole 42. The fastening component 41 is thereby securely fastened in the fastener hole 42.

As previously mentioned, the surrounding member 412 is fixed to the outer post surface of the post body 411. Preferably, the outer post surface of the post body 411 is formed with at least one groove equal in number to and having a shape complementing the surrounding member 412 for receiving a section of the surrounding member 412. Referring to Figure 3, in this embodiment, the outer post surface of the post body 411 is formed with a pair of spaced apart annular grooves 413 for receiving sections of the surrounding members 412. The resilient material of the surrounding members 412 enables retention of the surrounding members 412 in the annular grooves 413, thereby fixing the surrounding members 412 on the outer post surface of the post body 411.

However, the manner in which the surrounding member 412 is fixed to the outer post surface of the post body 411 is not limited to what is described above. Alternatively, the outer post surface of the post body 411 can be designed without the annular grooves 413, and the surrounding members 412 can, by virtue of the resilient material, surround tightly the outer post surface of the post body 411. In yet another alternative, an adhesive (not shown) can be used to adhere the surrounding members 412 to the outer post surface of the post body 411. Of course, the adhesive can also be used to adhere the surrounding members 412 in the annular grooves 413, thereby achieving the effect of attaching the surrounding members 412 to the outer post surface of the post body 411.

Although the number of surrounding members 412 in this embodiment is two, the number of surrounding members 412 is not limited to two, and can be just one, or three or more. Moreover, the surrounding member 412 can have an open ring shape, such as a C-ring, or a helical shape, as long as a portion of lines tangent to points on an outermost perimeter of the surrounding member 412 are at non-90° angles with respect to the post axis (D1). Of course, as previously mentioned, the outer post surface of the post body 411 can be formed with a helical groove 413 complementing the helical surrounding member 412.

In sum, when the fastening component 41 is pushed into the fastener hole 42, the surrounding members 412 are compressed and provide friction between the outer post surface of the post body 411 and the hole-defining wall so that the fastening component 41 is not easily removed from the fastener hole 42 along the axial direction. Moreover, since each of the surrounding members 412 is configured such that a line (D2) tangent to a point on the outermost perimeter of the surrounding member 412 is not perpendicular to the post axis (D1), the surrounding members 412 have a greater area of contact with the hole-defining wall along the axial direction, which enables more friction between the surrounding members 412 and the hole-defining wall that resists rotation of the fastening component 41 in the fastener hole 42. Therefore, when it is desired to interconnect the first and second bodies 3,2, it is only necessary to push the fastening component 41 into the fastener hole 42. The device 1 of the present invention is thus capable of quick assembly.

## Claims

1. A fastening component (41) comprising a cylindrical post body (411) extending along a post axis (D1), and a surrounding member (412),
**characterized in that** said surrounding member (412) is fixed to said post body (411) such that a portion of lines (D2) tangent to points on an outermost perimeter of said surrounding member (412) are at non-90° angles
(α) with respect to the post axis (D1).

2. The fastening component (41) as claimed in claim 1, wherein said surrounding member (412) is made of a resilient material.

3. The fastening component (41) as claimed in claim 2, wherein said resilient material of said surrounding member (412) is one of a silicone resin material and a rubber material.

4. The fastening component (41) according to any one of claims 1 to 3, wherein said surrounding member (412) has one of a closed shape, an open ring shape, and a helical shape.

5. The fastening component (41) according to any one of claims 1 to 4, wherein an outer post surface of said post body (411) is formed with at least one groove (413) equal in number to and having a shape complementing said surrounding member (412) for receiving a section of said surrounding member (412).

6. The fastening component (41) according to any one of claims 1 to 5, wherein said surrounding member (412) is adhered to said outer post surface of said post body (411).

7. A fastening unit adapted for interconnecting a first body (3) and a second body (2), comprising:
a hole-defining unit adapted to be provided in a surface of the second body (2) and defining a fastener hole (42), and
a fastening component (41) adapted to be fixed to the first body (3),
**characterized in that** the fastening component (41) is a fastening component according to any one of claims 1 to 6, and **in that** the hole-defining unit fittingly receives said fastening component (41) for interconnecting the first and second bodies (3,2).

8. The fastening unit as claimed in claim 7, wherein said fastening component (41) is pre-fabricated, and has one end embedded in the first body (3) during fabrication of the first body (3) through one of an injection molding and a foam molding process.

9. The fastening unit as claimed in claim 7, wherein said post body (411) of said fastening component (41) and the first body (3) are integrally formed.

10. A device (1), comprising:
a first body (3); and
a second body (2);
**characterized in that** said device (1) further comprises a fastening unit according to any one of claims 7 to 9.

11. The device (1) as claimed in claim 10, wherein said first body (3) is one of a display device and an external connecting component, and said second body (2) is the other of said display device and said external connecting component.
